# EUROPÄISCHE PATENTSCHRIFT

(11) **EP 0 214 935 B1**
(45) Veröffentlichungstag und Bekanntmachung des Hinweises auf die Patenterteilung: **31.03.1993**
(21) Anmeldenummer: 86810399.5
(22) Anmeldetag: 03.09.1986
(51) Int. Cl.: C07F 7/18, C09K 15/32

(54) **Sterisch gehinderte Siliciumesterstabilisatoren**
Sterically hindered silicon ester stabilizers
Stabiliseurs d'ester de silicium stériquement encombrés

(30) Priorität: 09.09.1985 US 773962
(43) Veröffentlichungstag der Anmeldung: 18.03.1987
(73) Patentinhaber: CIBA-GEIGY AG, 4002 Basel (CH)
(72) Erfinder: Pastor, Stephen D., Yonkers New York 10701 (US); Spivack, John D., Spring Valley New York 10977 (US)

(56) Entgegenhaltungen:
- DE-A- 2 823 932
- GB-A- 1 308 521
- US-A- 3 491 137

## Beschreibung

Vorliegende Erfindung betrifft neue sterisch gehinderte Siliciumester, deren Herstellung und deren Verwendung als Stabilisatoren für organische Polymere.

Silylesterderivate sterisch gehinderter Phenole, wie in Chemical Abstracts 83, 60454g (1975) beschrieben, wurden bereits als Stabilisatoren für Polyethylen beschrieben. Aus der DE-A-2 823 932 sind Silylverbindungen, insbesondere silylierte Thioether und Amine als Stabilisatoren für Polymere und Vernetzer für radikalisch polymerisierbare Polymere bekannt.

Gegenstand vorliegender Erfindung sind mindestens zwei Carbonsäureestergruppen enthaltende Silyloxyderivate, nämlich solche der Formel I 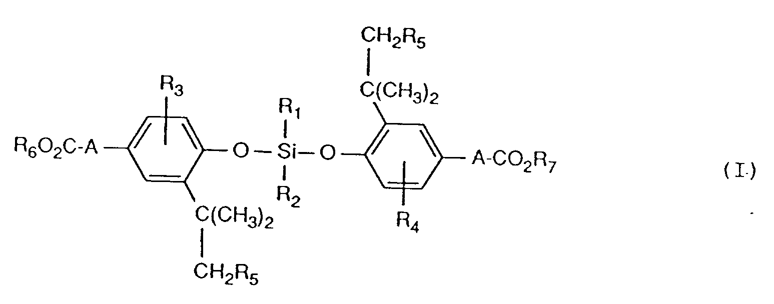
sowie Polymerprodukte der Formel II 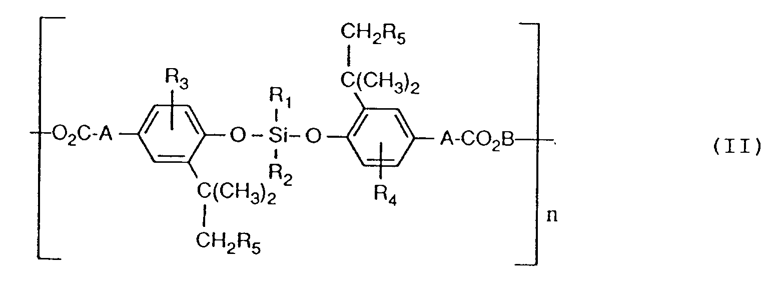
erhältlich durch Umsetzung von Verbindungen der Formel IV 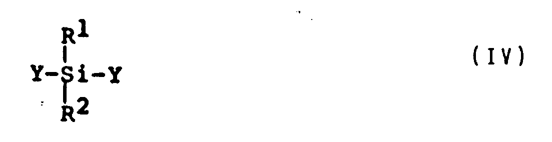
mit Verbindungen der Formel VII 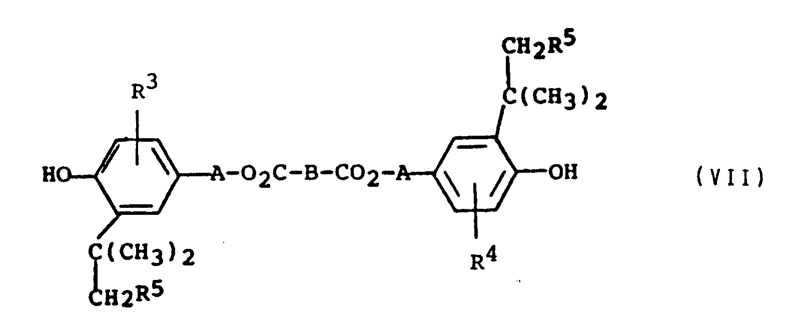
Worin R¹, R², R³, R⁴ und R⁵ unabhängig voneinander Wasserstoff, Alkyl mit 1 bis 18 Kohlenstoffatomen, Cycloalkyl mit 5 bis 8 Kohlenstoffatomen, gegebenenfalls durch Alkyl mit 1 bis 18 Kohlenstoffatomen substituiertes Phenyl oder gegebenenfalls durch Alkyl mit 1 bis 12 Kohlenstoffatomen substituiertes Aralkyl mit 7 bis 9 Kohlenstoffatomen, R⁶ und R⁷ unabhängig Voneinander Alkyl mit 1 bis 30 Kohlenstoffatomen, Cycloalkyl mit 5 bis 8 Kohlenstoffatomen, gegebenenfalls durch Alkyl mit 1 bis 18 Kohlenstoffatomen substituiertes Phenyl oder gegebenenfals durch Alkyl mit 1 bis 12 Kohlenstoffatomen substituiertes Aralkyl mit 7 bis 9 Kohlenstoffatomen, A eine direkte Bindung oder einen Methylen- oder Ethylenrest, B einen Alkylenrest mit 2 bis 10 Kohlenstoffatomen, den Rest der Formel -CH₂CH₂-S-CH₂CH₂- oder der Formel III

-CH₂CH₂-(O-CH₂CH₂)ₘ- (III)

wobei m eine ganze Zahl von 1 bis 4 ist, oder B ferner einen Phenylenrest oder einen durch ein Sauerstoff- oder Schwefelatom oder die Gruppe der Formel -C(CH₃)₂- unterbrochenen Bi-phenylrest, n eine ganze Zahl von 2 bis 100, und Y ein Chlor oder Bromatom darstellen.

Bei der Definition der Verbindungen der Formeln I und II können R¹, R², R³, R⁴ und R⁵ Alkyl mit 1 bis 18 Kohlenstoffatomen sowie R⁶ und R⁷ Alkyl mit 1 bis 30 Kohlenstoffatomen bedeuten, wie zum Beispiel Methyl, Ethyl, n-Propyl, Isopropyl, Butyl, sek.Butyl, tert.Butyl, 1,1-Dimethylbutyl, n-Heptyl, n-Octyl, 2-Ethylhexyl, 1,1,3,3-Tetramethylbutyl, n-Nonyl, n-Decyl, n-Undecyl, n-Dodecyl, 1,1,3,3,5,5-Hexamethylhexyl, n-Tetradecyl, n-Heptadecyl, n-Octadecyl und n-Hexadecyl Als R¹ und R² wird Methyl besonders bevorzugt, und R³ und R⁴ stehen vorzugsweise für tert.-Butyl.

R¹, R², R³, R⁴, R⁵, R⁶ und R⁷ können auch eine Cycloalkylgruppe mit 5 bis 8 Kohlenstoffatomen bedeuten, wie zum Beispiel Cyclopentyl, Cyclohexyl, Methylcyclohexyl und Cyclooctyl.

Als gegebenenfalls durch Alkyl mit 1 bis 12 Kohlenstoffatomen substituiertes Aralkyl können R¹, R², R³, R⁴, R⁵, R⁶ und R⁷ beispielsweise Benzyl, α -Methylbenzyl, Phenyl ethyl, α ,α-Dimethylbenzyl oder an der Phenylgruppe durch eine, zwei oder drei Methylgruppen substituiertes Benzyl bedeuten.

Als R¹, R², R³, R⁴, R⁵, R⁶ und R⁷ kann auch durch Alkyl mit 1 bis 18 Kohlenstoffatomen, wie beispielsweise durch die bereits oben für die Definition von Alkyl mit 1 bis 18 Kohlenstoffatomen erwähnten Alkylgruppen, substituiertes Phenyl vorliegen.

Als R⁶ und R⁷ kommen Alkyl mit 1 bis 30 Kohlenstoffatomen, wie zum Beispiel die oben bereits für die entsprechende Definition der Gruppen R¹ bis R⁵ erwähnten Alkylgruppen, sowie zusätzlich n-Eikosyl, n-Dodecyl, n-Tetrakosyl oder n-Triakontyl in Frage. n-Dodecyl oder Octadecyl sind als R⁶ und R⁷ besonders bevorzugt.

Bei der Definition der Verbindungen der Formel II kann B ein Alkylenrest mit 2 bis 10 Kohlenstoffatomen, wie zum Beispiel Ethylen, 1,2-Propylen, 1,3-Propylen, 1,4-Tetramethylen, 1-Ethylethylen, 1,6-Hexamethylen, 1,8-Octamethylen und 1,10-Decamethylen sein. Beispiele für zweiwertige Reste der Formel III sind 3-Oxapentamethylen, 3,5-Dioxaoctamethylen sowie 3,5,7-Trioxa-undecamethylen.

B kann auch einen Biphenylenrest bedeuten, der durch ein Sauerstoff- oder Schwefelatom oder durch die Gruppe -C(CH₃)₂- unterbrochen ist, wie beispielsweise 4,4'-Diphenylether, 4,4'-Diphenylsulfid und 4,4'-Diphenyl(dimethyl)-methan.

Von besonderem Interesse sind solche Verbindungen der Formeln I oder II, bei denen R¹ und R² Wasserstoff oder Alkyl mit 1 bis 6 Konlenstoffatomen, R³ und R⁴ Wasserstoff oder Alkyl mit 1 bis 6 Kohlenstoffatomen, R⁵ Wasserstoff, R⁶ und R⁷ Alkyl mit 1 bis 20 Kohlenstoffatomen, A eine direkte Bindung, Methylen oder Ethylen, B Alkylen mit 2 bis 10 Kohlenstoffatomen und n eine ganze Zahl von 2 bis 10 bedeuten.

Solche Verbindungen der Formeln I und II sind besonders bevorzugt, bei denen R¹ und R² Wasserstoff oder Alkyl mit 1 bis 4 Kohlenstoffatomen, R³ und R⁴ Wasserstoff oder Alkyl mit 1 bis 6 Kohlenstoffatomen, R⁵ Wasserstoff, R⁶ und R⁷ Alkyl mit 1 bis 18 Kohlenstoffatomen, A eine direkte Bindung oder einen Ethylenrest, B einen Hexamethylenrest und n eine Zahl von 2 bis 10 darstellen.

Besonders bevorzugte Verbindungen der Formeln I und II sind solche, bei denen R¹ und R² Wasserstoff oder Methyl, R³ und R⁴ tert.Butyl in ortho-Stellung zum Phenolsauerstoffatom, R⁵ Wasserstoff, R⁶ und R⁷ Alkyl mit 10 bis 18 Kohlenstoffatomen, A eine direkte Bindung, B einen Hexamethylenrest und n eine Zahl von 2 bis 5 bedeuten.

Die Herstellung der Verbindungen der Formel I kann beispielsweise dadurch erfolgen, dass man eine Verbindung der Formel (IV) (z.B. ein Mol) 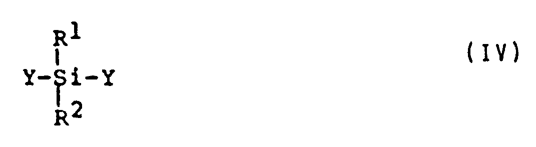
worin Y ein Chlor- oder Bromatom bedeutet, mit einer Verbindung der Formel (V) (z.B. ein Mol) 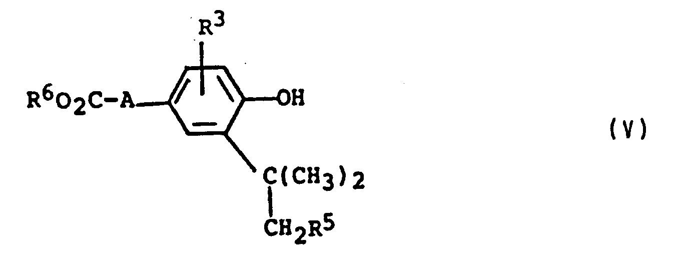
und einer Verbindung der Fomel (VI) (z.B. ein Mol) 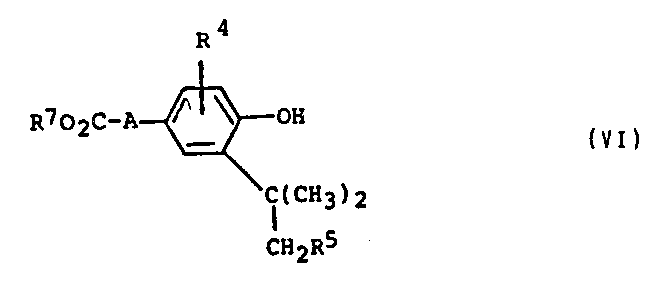
wobei R¹ bis R⁷ die oben erwähnten Bedeutungen haben, umsetzt.

Die Herstellung der Verbindungen der Formel II kann beispielsweise dadurch erfolgen, dass man die Verbindung der Formel (VII) (z.B. ein Mol) 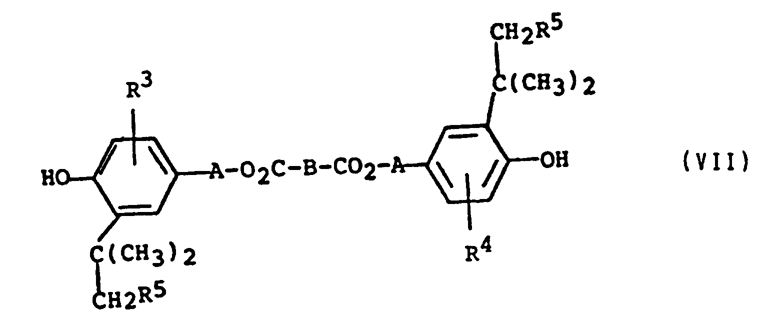
mit einer Verbindung der Formel IV, wobei R¹ bis R⁵, A und B die oben erwähnten Bedeutungen haben, umsetzt.

Die Verfahren wie oben beschrieben werden vorzugsweise in Gegenwart von Lösungsmitteln und/oder Verdünnungsmitteln durchgeführt, die gegenüber den Reaktionspartnern inert sind. Dabei sind aprotische Lösungsmittel besonders geeignet, wie beispielsweise aliphatische und aromatische Kohlenwasserstoffe, wie Hexan, Cyclohexan, Benzol, Toluol und Xylol, halogenierte Kohlenwasserstoffe wie chloriertes Ethylen, Tetrachlorkohlenstoff, Chloroform and Chlorbenzol, sowie Ether und etherartige Verbindungen wie Diethylether, Mono-, Di-, Tri- und Tetraethylenglykoldimethylether, Mono-, Di-, Tri- und Tetraethylenglykoldiethylether oder Tetrahydrofuran, sowie Nitrile wie Acetonitril.

Ferner kann man dem Reaktionsgemisch ein säurebindendes Mittel oder einen Komplexbildner für Kationen zusetzen. Dazu eignen sich insbesondere tertiäre Amine wie Trialkylamine, z.B. Triethylamin, Pyridin und Pyridinbasen oder Dialkylaniline. Ein Beispiel für geeignete Komplexbildner sind Kronenether.

Die Reaktion lässt sich bei verschiedenen Temperaturen, vorzugsweise bei 0^{o}C bis 150^{o}C durchführen, und die Reaktionszeit kann im Bereich von wenigen Minuten bis zu mehreren Stunden oder Tagen liegen, was stark von der Reaktionsfähigkeit der eingesetzten Phenolverblndungen abhängt.

Die dabei enstehenden Produkte können nach üblichen Methoden isoliert werden, zum Beispiel durch Filtrieren, Lösungsmittelextraktion oder Destillation, vorzugsweise bei vermindertem Druck.

Je nach Verwendungszweck kann es vorteilhaft sein, das gebildete Rohprodukt einzusetzen oder es durch Destillation oder Kristallisation aus einem organischen Lösungsmittel zu reinigen.

Die Ausgangsstoffe der Formeln IV, V und VI sind zum Teil bekannte Produkte und nach bekannten Methoden herstellbar. Spezielle Literaturstellen zur Herstellung von Halogensilanen der Formel IV sind "Comprehensive Organometallic Chemistry [Ausführliche Organometallische Chemie]", Herausgeber: G. Wilkinson, F.G.A. Stone und E.W. Abel, Pergamon Press, New York, 1982, S. 10-12 und S. 177-185, sowie "Methoden der Organischen Chemie", Houben-Weyl, Herausgeber E. Müller und 0. Bayer, Georg Thieme Verlag, New York 1980, S. 1-423, Band XIII/5.

Die Ausgangsstoffe der Formel VII sind zum Teil bekannte Produkte und lassen sich beispielsweise durch eine Umesterungsreaktion aus einem Mol einer Verbindung der Formel VIII und einem Mol einer Verbindung der Formel IX 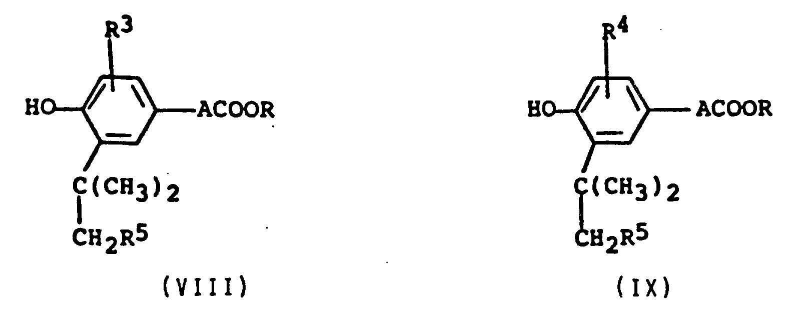
mit einem Mol einer Verbindung der Formel X

HO-B-OH (X)

worin A, B, R³, R⁴ und R⁵ die oben angegebenen Bedeutungen haben und R für eine Niederalkylgruppe steht, herstellen.

Die erfindungsgemässen Verbindungen der Formeln I und II sind bei der Stabilisierung organischer, oxydativem, thermischem und aktinischem Abbau unterliegender Materialien, wie Kunststoffen, Polymeren und Harzen, besonders wirksam. Zudem zeigen sie erhöhte Hydrolysebeständigkeit.

Als Substrate, bei denen die Verbindungen der Formeln I und II besonders nützlich sind, kommen Polyolefine wie Polyethylen und Polypropylen, Polystyrol einschliesslich schlagzähem Polystyrol, ABS-Harz, SBR, Isopren sowie Naturkautschuk, Polyester einschliesslich Polyethylenterephthalat und Polybutylenterephthalat einschliesslich Copolymeren, sowie Schmieröle, wie solche, die sich von Mineralöl und synthetischen Ölen ableiten, in Betracht.

Allgemein können die folgenden Polymeren stabilisiert werden:
1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.
2. Mischungen der unter 1) genannten Polymeren, z.B. Mischungen von Polypropylen mit Polyisobutylen.
3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.
4. Polystyrol, Poly-(p-methylstyrol).
5. Copolymere von Styrol oder α-Methylstyrol mit Dienen oder Acrylderivten, wie z.B. Styrol-Butadien, Styrol-Acrylnitril, Styrol-Alkylmethacrylat, Styrol-Maleinsäureanhydrid, Styrol-Butadien-Ethylacrylat, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrtol.
6. Propfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamid und Polyacrylnitril.
9. Copolymere der unter 8) genannten Monomeren untereinander oder mit anderen ungesättigten Monomeren, wie z.B. Acrylnitril-Butadien-Copolymerre, Acrylnitril-AlkylacrylatCopolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten.
13. Polyphenylenoxide und -sulfide und deren Mischungen mit Styrolpolymeren.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder Aminocarbonsäuren oder den entsprechenden Lactamen ableiten, wie Polyamid 4, Polyamid 6, Polyamid 6/6, Polyamid 6/10, Polyamid 11, Polyamid 12, Poly2,4,4-trimethylhexamethylenterephthalamid, Poly-m-phenylenisophthalamid, sowie deren Block-Copolymere mit Polyethern, wie z.B. mit Polyethylenglykol, Polypropylenglykol oder Polytetramethylenglykol.
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Poly-[2,2-(4-hydroxyphenyl)-propane]-terephthalat, Polyhydroxybenzoate, sowie Block-Polyether-ester, die sich von Polyethern mit Hydroxylendgruppen ableiten.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen sowie Vinylverbindungen als Vernetzungsmittel ableiten, wie auch eren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemich abgewandelte Derivate, wie Celluloseacetate, -propionate und -butyrate bzw. die Celluloseether, wie Methylcellulose.
27. Mischungen (Polyblends) der vorgenannten Polymeren, wie z.B. PP/EPDM, Polyamid 6/EPDM oder ABS, PVC/EVA, PVC/ABS, PVC/MBS, PC/ABS, PBTP/ABS.
28. Natürliche und synthetische organische Stoffe, die reine monomere Verbindungen oder Mischungen von solchen darstellen, beispielsweise Mineralöle, tierische und pflanzliche Fette, Öle und Wachse, oder Öle, Wachse und Fette auf Basis synthetischer Ester (z.B. Phthalate, Adipate, Phosphate oder Trimelllthate), sowie Abmischungen synthetischer Ester mit Mineralölen in beliebigen Gewichtsverhältnissen, wie z.B. als Weichmacher für-Polymere Spinnpräparationen Anwendung finden, sowie deren wässrige Emulsionen.
29. Wässrige Emulsionen natürlicher oder synthetischer Kautschuke, wie z.B. Naturkautschuk-Latex oder Latices von carboxylierten Styrol-Butadien-Copolymeren.

Die erfindungsgemässen Verbindungen der Formeln I und II werden im allgemeinen in einer Menge von etwa 0,01 bis etwa 5 Gew.-% der zu stabilisierenden Zusammensetzung zugesetzt, doch kann dies je nach dem jeweiligen Substrat und der Anwendung schwanken. Ein bevorzugter Bereich liegt zwischen etwa 0,5 und etwa 2%, und insbesondere 0.1 bis etwa 1%.

Die erfindungsgemässen Stabilisatoren lassen sich leicht nach üblichen Methoden in irgendeiner zweckmässigen Stufe vor der Herstellung von Formkörpern daraus in die organischen Polymeren einarbeiten. Beispielsweise kann man den Stabilisator in trockener Form oder eine Suspension oder Emulsion des Stabilisators mit einer Lösung, Suspension oder Emulsion des Polymeren vermischen. Die dabei erhaltenen, erfindungsgemäss stabilisierten Polymerzusammensetzungen können gegebenenfalls noch verschiedene herkömmliche Zusatzstoffe wie die folgenden enthalten.
1. Antioxidantien
1.1. Alkylierte Monophenole, z.B. 2,6-Di-tert.-butyl-4-methylphenol, 2-Tert.-butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol.
1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.
1.3. Hydroxylierte Thiodiphenylether, z.B, 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
1.4. Alkyliden-Bisphenole, z.B. 2,2'-Methylen-bis-(6-tert.-butyl-4-methylphenol), 2,2'-Methylen-bis-(6-tert.butyl-4-ethylphenol), 2,2'-Methylen-bis-([4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α -methylbenzyl)-4-nonylphenol], 2,2'-Methylen-bis-[6-(α ,α - dimethylbenzyl)-4-nonylphenol], 4,4'-Methylen-bis-(2,6-di-tert.butylphenol), 4,4'-Methylen-bis-(6-tert.butyl-2-methylphenol), 1,1-bis-(5-tert.butyl-4-hydroxy-2-methylphenyl)-butan, 2,6-Di-(3-tert.butyl-5-methyl-2-hydroxybenzyl-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglykol-bis-[3,3-bis-(3'-tert.-butyl-4'-hydroxyphenyl)-butyrat], Di-(3-tert.butyl-4-hydroxy-5-methylphenyl)-dicyclopentadien, Di-[2-(3'-tert.butyl-2'-hydroxy-5'-methyl-benzyl)-6-tert.-butyl-4-methylphenyl]-terephthalat.
1.5. Benzylverbindungen, z.B. 1,3,5-Tri-(3,5-di-tert.butyl-4-hydroxybenzyl)-2,4,6-trimethylbenzol, Di-(3,5-di-tert.-butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.-butyl-4-hydroxybenzyl-phosphonsäuredioctadecylester, 3,5-Di-tert.butyl-4-hydroxybenzyl-phosphonsäure-monoethylester, Calcium-salz.
1.6. Acylaminophenole, z.B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-Di-tert.butyl-4-hydroxyphenoxy)-carbaminsäure-octylester.
1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglykol, Thiodiethylenglykol, Diethylenglykol, Triethylenglykol, Pentaerythrit, Tris-hydroxyethyl-isocyanurat, Di-hydroxyethyl-oxalsäurediamid.
1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglykol, Thiodiethylenglycol, Diethylenglykol, Triethylenglykol, Pentaerythrit, Tris-hydroxyethyl-isocyanurat, Di-hydroxyethyl-oxalsäurediamid.
1.9. Amide der β-(3,5-Di-tert.butyl-4-hydroxyphenyl)-propionsäure, wie z.B. N,N'-Di-(3,5-di-tert.butyl-4-hydroxyphenylpropionyl)-hexamethylendiamin, N,N'-Di-(3,5-di-tert.butyl-4-hydroxyphenylpropionyl)-trimethylendiamin, N,N'-Di-(3,5-di-tert.butyl-4-hydroxyphenylpropionyl)-hydrazin.
2. UV-Absorber und Lichtschutzmittel
2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor3'-tert.butyl-5'-methyl-, 3'-sec.Butyl-5'-tert.butyl, 4'-Octoxy-, 3',5'-Di-tert.amyl-, 3',5'-BiS-(α ,α -dimethylbenzyl)-Derivat.
2.2. 2-Hydroxybenzophenone, wie z.B., das 4-Hydroxy, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
2.4. Acrylate, wie z.B. α-Cyan-β ,β-diphenylacrylsäure-ethylester bzw. -isooctylester, α-Carbomethoxy-zimtsäuremethylester, α-Cyan-β-methyl-p-methoxy-zimtsäuremethylester bzw. -butylester, α-Carbomethoxy-p-methoxy-zimtsäure-methylester, N-(β-Carbomethoxy-β-cyanvinyl)-2-methyl-indolin.
2.5. Nickelverbindungen, wie z.B. Nickel komplexe des 2,2'-Thio-bis-[4-(1,1,3,3-tetramethylbutyl)-phenols], wie der 1:1 oder der 1:2 Komplex, gegebenenfalls mit zusätzlichen Liganden, wie n-Butylamin, Triethanolamin oder N-Cyclohexyldiethanolamin, Nickeldibutyldithiocarbamat, Nickelsalze von 4-Hydroxy-3,5-di-tert.butylbenzylphosphoflsäure-monoalkylestern, wie vom Methyl- oder Ethylester, Nickelkomplexe von Ketoximen, wie von 2-Hydroxy-4-methylphenyl-undecylketonoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butan-tetracarbonsäure, 1,1'-(1,2-Ethandiyl-bis-(3,3,5,5-tetramethyl-piperazinon).
2.7. Oxalsäurediamide, wie z.B. 4,4'-Di-octyloxy-oxanilid, 2,2'-Dioctyloxy-5,5'-di-tert.butyl-oxanilid, 2,2'-Di-dodecyloxy-5,5'-di-tert.butyl-oxanilid, 2-ethoxy-2'ethyloxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
3. Metalldesaktivatoren, wie z.B. N,N'-Diphenyloxalsäurediamid, N-Salicyl-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäurehydrazid.
4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.
5. Peroxidzerstörende Verbindungen, wie z.B. Ester der - Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyldithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melemin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.
8. Nukleierungsmittel, wie z.B. 4-tert.Butylbenzoesäure, Adipinsäure, Diphenylessigsäure.
9. Füllstoffe und Verstärkungsmittel, wie z.B. Calciumcarbonat, Sillkate, Glasfasern, Asbest, Talk, Kaolin, Glimmer, Bariumsulfat, Metalloxide und -hydroxide, Russ, Graphit.
10. Sonstige Zusätze, wie z.B. Weichmscher, Gleitmittel, Emulgatoren, Pigmente, optische Aufheller, Flammschutzmittel, Antistatika, Treibmittel und Thiosynergisten wie Dilaurylthiodipropionat oder Distearylthiodipropionat.

Die nachfolgenden Beispiele dienen der Erläuterung dieser Erfindung. Dabei sind Teile stets Gewichtsteile, falls nicht anders angegeben.

### Beispiel 1

### Methyl-di-(4-n-dodecyloxycarbonyl-2,6-di-tert.-butylphenoxy)-silan

Man beschickt einen in der Flamme getrockneten, mit kühler, magnetischem Rührer, Thermometer und Trichter für langsame Zugabe ausgerüsteten 300 ml-Kolben mit einem Gemisch aus 2,30 g (0,02 Mol) Dichlormethylsilan, 4,04 g (0,04 Mol) Triethylamin und 25 ml Toluol. Bei 0 bis 5^{o}C versetzt man im Verlauf von 25 Minuten mit 16,7 g (0,40 Mol) 2,6-Di-tert.butyl-4-hydroxybenzoesäure-n-dodecylester in 100 ml Toluol. Dann lässt man das so erhaltene Gemisch sich auf Raumtemperatur erwärmen und rührt, bis die Phenol-OH-Absorption im IR-Spektrum verschwindet. Man filtriert und engt das Filtrat im Vakuum ein. Der Rückstand wird durch Umkristallisieren aus einem Acetonitril/Toluolgemisch (1:1) gereinigt, wobei man 2,70 g farblosen Feststoff vom Schmelzpunkt 55,5-56,5^{o}C und der folgenden Formel 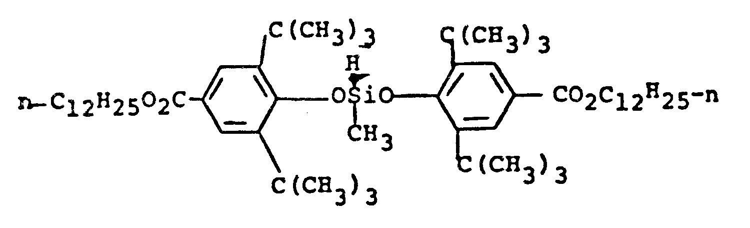
erhält.

| | | | |
|---|---|---|---|
| Analyse: | Berechnet für C₅₅H₉₄O₆Si: | C 75,12 %; | H 10,77 %. |
| | Gefunden: | C 74,96 %; | H 10,54 % |

### Beispiel 2

### Herstellung eines Copolymeren aus 1,6-Hexandiol-bis-(3,5-di-tert.butyl-4-hydroxybenzoesäureester) und Dimethyldichlorsilan

Man beschickt einen in der Flamme getrockneten, mit Kühler, magnetischem Rührer, Thermometer, Stickstoffschutzgaseinlass und Zugabetrichter ausgerüsteten Einliterkolben mit einem Gemisch aus 29,1 g (0,05 Mol) 1,6-Hexandiol-bis-(3,5-ditert.-butyl-4-hydroxybenzoesäureester) und 300 ml Tetrahydrofuran. Bei Raumtemperatur versetzt man das Gemisch mit 2,4 g (0,10 Mol) Natriumhydrid in 100 ml Tetrahydrofuran. Nach 24 Stunden Rühren bei Raumtemperatur erhitzt man 2 Stunden lang auf 40-50^{o}C. Dann versetzt man mit einem Gemisch aus 6,45 g (0,05 Mol) Dichlordimethylsilan und 0,32 g (0,001 Mol) Tetrabutylammoniumbromid in 25 ml Tetrahydrofuran. Das Gemisch wird dann auf 40^{o}C erhitzt, bis die Phenol-OH-Absorption im IR-Spektrum verschwindet. Nach dem Abkühlen filtriert man und engt das Filtrat im Vakuum ein. Der Rückstand wird dann durch Trokkensäulenchromatographie über Kieselgel (Toluol als Laufmittel ) gereinigt, wobei man 17,5 g farblosen Feststoff vom Schmelzpunkt 67-69^{o}C erhält.

| | | | |
|---|---|---|---|
| Analyse: | Berechnet für C₇₄H₁₁₂O₁₂Si: | C 71,43 %; | H 9,15 %. |
| | Gefunden: | C 71,01 %; | H 9,10 %. |

### Beispiel 3

### Bis-(2,6-di-tert.butyl-4-n-hexyloxycarbonylphenoxy)-dimethylsilan

Man beschickt einen in der Flamme getrockneten, mit Kühler, magnetischem Rührer, Thermometer, Stickstoffschutzgaseinlass und Zugabetrichter ausgerüsteten 500 ml-kolben mit einem Gemisch aus 1,2 g (0,05 Mol) Natriumhydrid und 100 ml Tetrahydrofuran. Bei Raumtemperatur versetzt man mit einem Gemisch aus 16,7 g (0,05 Mol) 3,5-Di-tert.butyl-4-hydroxybenzoesäure-n-hexylester in 50 ml Tetrahydrofuran. Die so erhaltene Suspension wird dann gerührt, bis sie homogen ist und die Gasentwicklung aufgehört hat (ungefähr 2 Stunden). Die so entstandene Lösung versetzt man bei Raumtemperatur mit einem Gemich aus 3,23 g (0,025 Mol) Dichlordimethylsilan und 1,1 g (0,0025 Mol) 15-Kronenether-5 in 25 ml Tetrahydrofuran. Das Reaktionsgemisch wird auf 40^{o}C erhitzt, bis die Phenol-OH-Absorption im IR-Spektrum verschwindet. Nach Abkühlen wird das Gemisch filtriert und das Filtrat im Vakuum eingeengt. Der Rückstand wird durch Flash-Chromatographie über Kieselgel (Heptan/Toluol 1:1 als Laufmittel) gereinigt, wobei man 7,37 g farblosen Sirup der Formel 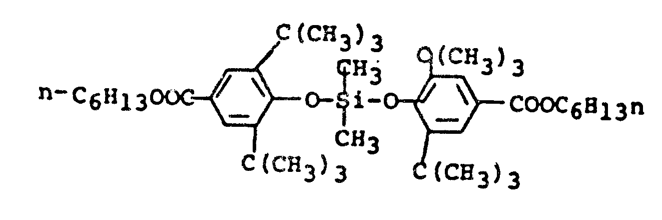
erhält.

| | | | |
|---|---|---|---|
| Analyse: | Berechnet für C₄₄H₇₂O₆Si: | C 72,9 %; | H 10,0 %. |
| | Gefunden: | C 73,1 %; | H 9,9 %. |

### Beispiel 4

### Bis-(2,6-di-tert.butyl-4-n-dodecyloxycarbonylphenoxy)-dimethylsilan

Man verfährt wie in Beispiel 3, unter Verwendung von 1,32 g (0,055 Mol ) Natriumhydrid, 20,93 g (0,05 Mol) 3,5-Di-tert.butyl-4-hydroxybenzoesäureester-n-dodecylester, 1,1 g (0,0025 Mol) 15-Kronenether-5, 3,23 g (0,025 Mol) Dichlordimethylsilan und 150 ml Tetrahydrofuran. Der Rückstand wird durch Flash-Chromatographie über Kieselgel (35 Teile Heptan: 5 Teile Essigester als Laufmittel) gereinigt, wobei man 8,4 g farblosen Sirup der Formel 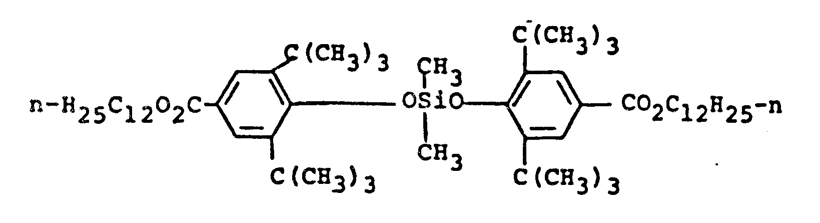
erhält.

| | | | |
|---|---|---|---|
| Analyse: | Berechnet für C₅₆H₉₆O₆Si : | C 75,3 %; | H 10,8 %. |
| | Gefunden: | C 75,5 %; | H 10,9 %. |

### Beispiel 5

### Bis-(2,6-dit-tert.butyl-4-methoxycarbonylphenoxy)-dimethylsilan

Man verfährt wiederum wie in Beispiel 3, unter Verwendung von 5,28 g (0,22 Mol) Natriumhydrid, 58,87 g (0,2 Mol) 3,5-Di-tert.butyl-4-hydroxybenzoesäuremethylester, 2,2 g (0,1 Mol) 15-Kronenether-5, 12,9 g (0,1 Mol Dichlordimethylsilan und 200 ml Tetrahydrofuran. Der Rückstand wird durch Umnkristallisieren aus Toluol/Acetonitril (1:1) gereinigt, wobei man 34,4 g farblosen Feststoff, Schmelzpunkt 197-198^{o}C, der Formel 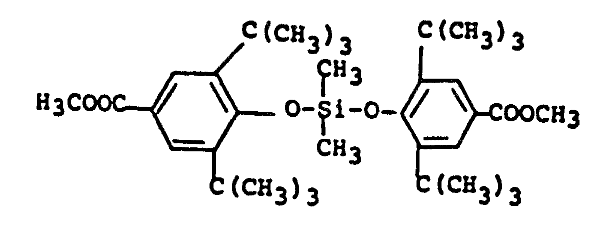
erhält.

| | | | |
|---|---|---|---|
| Analyse: | Berechnet für C₃₄H₅₂O₆Si: | C 69,8 %; | H 9,0 %. |
| | Gefunden: | C 70,2 %; | H 9,1 %. |

### Beispiel 6

### Bis-(2,5-di-tert.butyl-4-n-octadecyloxycarbonylphenoxy)-dimethylsilan

Man verfährt wie in Beispiel 3, unter Verwendung von 2,64 g (0,11 Mol) Natriumhydrid, 50,3 g (0,1 Mol) 3,5-Di-tert.butyl-4-hydroxybenzoesäure-n-octadecylester, 1,1 g (0,005 Mol) 15-Kronenether-5, 6,4 g (0,5 Mol) Dichlordimethylsilan und 200 ml Tetrahydrofuran. Der Rückstand wird durch Flash-Chromatographie über Kieselgel (90 Teile Heptan: 10 Teile Toluol als Laufmittel) gereinigt, wobei man 6,70 g farblosen Feststoff, Schmelzpunkt 68,5-69,5^{o}C, der Formel 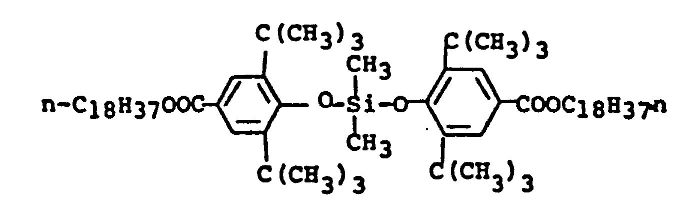
erhält.

| | | | |
|---|---|---|---|
| Analyse: | Berechnet für C₆₈H₁₂₀O₆Si: | C 76,9 %; | H 11,4 %. |
| | Gefunden: | C 77,0 %; | H 11.4 %. |

### Beispiel 7

### Dimethyl-bis-{2,6-di-tert.-butyl-4-[2-(methoxycarbonyl)-ethyl ]-phenoxy}-silan

Eine Suspension von 3,06 g Natriumhydrid in 25 ml Tetraethylenglykoldimethylether versetzt man tropfenweise unter Rühren mit einer Lösung von 3-(3,5-Di-tert.butyl-4-hydroxyphenyl)-propionsäuremethylester in 115 ml Tetraethylenglykoldimethylether. Man rührt bis zum Aufhören der Wasserstoffentwicklung und versetzt das so erhaltene Reaktionsgemisch nacheinander mit 1,65 g 15-Kronenether-5 und 4,84 g Dichlordimethylsilan. Man erhitzt 26 Stunden lang auf 70^{o}C und verteilt das Reaktionsgemisch dann nach Abkühlen zwischen 1 Liter Diethylether und 1 Liter Wasser. Die organische Phase wird abgeschieden und dann dreimal mit Wasser extrahiert. Man trocknet die organische Phase über wasserfreiem Natriumsulfat und kristallisiert den Rückstand aus Acetonitril um, wobei man 22,4 g (46 %) weissen Feststoff, Schmelzpunkt 122-129^{o}C, der folgenden Formel 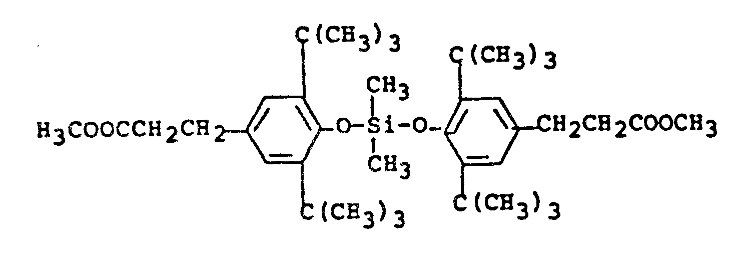
erhält.

| | | | |
|---|---|---|---|
| Analyse: | Berechnet für C₃₈H₆₀O₆Si: | C 71,2 %; | H 9,44 %. |
| | Gefunden: | C 72,5 %; | H 9.3 %. |

### Beispiel 8

### Dimethyl-bis{2,6-di-tert.butyl-4-[2-(octadecyloxycarbonyl)-ethyl ]-phenoxy}-silan

Man verfährt wie in Beispiel 7, unter Verwendung von 3,06 g Natriumhydrid, 39,82 g 3-(3,5-tert.Butyl-4-hydroxyphenyl)-propionsäure-n-octadecylester, 1,65 g 15-Kronenether-5 und 4,84 g Dichlordimethylsilan. Nicht umgesetzter 3-(3,5-Di-tert.butyl-4-hydroxyphenyl)-propionsäure-n-octadecylester wird durch Destillation im Kugelrohr entfernt und der Rückstand aus 2-Propanol umkristallisiert, wobei man 14,4 g (34 %) weissen Feststoff, Schmelzpunkt 50-50^{o}C, der folgenden Formel 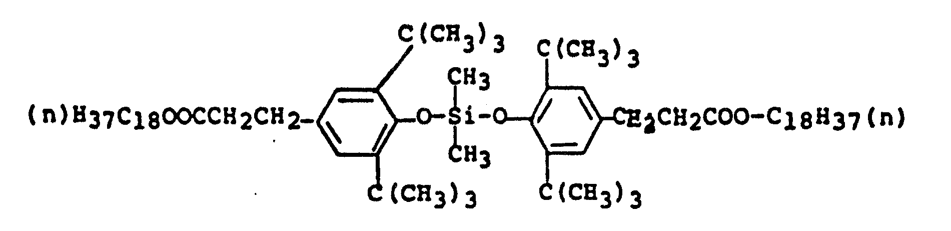
erhält.

| | | | |
|---|---|---|---|
| Analyse: | Berechnet für C₇₂H₁₂₈O₆Si: | C 77,4 %; | H 11,4 % |
| | Gefunden: | C 77,1 %; | H 11.5 %. |

### Beispiel 9

Unstabilisiertes Polypropylenpulver (Hercules Profax® 6501) wird gründlich mit der angebenen Menge Stabiltsator vermischt. Die vermischten Materialien werden dann in einem Zweiwalzenwalzwerk 5 Minuten lang bei 182^{o}C gewalzt, wonach man das stabilisierte Polypropylen von den Walzen als Bahn abzieht und abkühlen lässt. Das gewalzte Polypropylen wird dann in Stücke geschniten und auf einer hydraulischen Presse bei 220^{o}C und 1,2 · 10⁶ Pa zu 0,127 mm dicken Folien verpresst. Die Proben werden dann bis zum Versagen in einer fluoreszenten Hohensonne/Schwarzlichtkammer [FS/BL = fluorescent sunlight/black light] belichtet. Versagen wird als die erforderliche Zeit in Stunden angegeben, bis die an den belichteten Filmen durch Infrarotspektroskopie gemessene Carbonylextinktion 0,5 beträgt.

| Stabilisator: Verbindung aus | Stabilisator-Konzentration (Gew.-%) | FS/BL-Testergebnisse (Stunden bis zum Versagen) |
|---|---|---|
| ohne | - | 250 |
| Beispiel 1 | 0,3 | 560 |
| Beispiel 2 | 0,3 | 490 |
| Beispiel 3 | 0,3 | 470 |
| Beispiel 4 | 0,3 | 600 |
| Beispiel 5 | 0,3 | 500 |
| Beispiel 6 | 0,3 | 500 |

Diese Daten zeigen deutlich die wirksame Stabilisierung durch die erfindungsgemässen Verbindungen.

### Beispiel 10

Die Oxidationsstabilität der gewalzten Polypropylenprobe aus Beispiel 9 mit 0,3 Gew.-% der Verbindung aus Beispiel 2 auf 0,635 mm dicken Platten wird im Zwangsumluftofen bei 150^{o}C gemessen. Die Platten gelten als oxidiert, wenn sie die ersten Anzeichen einer Zersetzung zeigen (z.B. Risse oder braune Kanten). Oxidationsstabilität, Zeit

| Stabilisator: Verbindung aus | Stabilisator-Konzentration (%) | bis zum Auftreten von Zersetzung (Stdn) |
|---|---|---|
| Beispiel 2 | 0,3 | 20 |

### Beispiel 11

### PVC-Stabilisierung

Das PVC-Harz ®Geon 85862 in Pulverform mit einem Butylzinn-mercaptid als Hitzestabilisator wird mit 5 Teilen TiO₂ vermischt; diese Formulierung dient als Kontrolle (A). Je ein Teil der erfindungsgemässen Stabilisatoren auf 100 Teile Harz wird zu einem Anteil von A gegeben. Man extrudiert diese stabilisierten Formulierungen, verpresst sie zu Prüfplatten und prüft diese durch Kurzzeitalterung in einem Xenon-Weatherometer. Der Gelbwert (Yellowness-Index) der Platten wird bestimmt. Die Ergebnisse sind in der folgenden Tabelle angegeben. Niedrige Werte bedeuten geringe Verfärbung.

### Lichtstabllisierung von Hart-PVC

Grundharz -®Geon 85862 von B.F. Goodrich, mit Butylzinn-mercaptid als Hitzestabilisator.

Prüfproben - Verpresste Platten.

### Belichtung im Xenon-Weatherometer

| | Yellowness-Index | | |
|---|---|---|---|
| | am Anfang | 770 Stunden | 2030 Stunden |
| 100 Teile Grundharz + 5 Teile TiO₂ (Rutil) (A) | 7,3 | 13,5 | 29,4 |
| 100 Teile Grundharz + 5 Teile TiO₂ + 1 Teil der Verbindung von Beispiel 2 | 7,3 | 9,5 | 20,2 |
| 100 Teile Grundharz + 5 Teile TiO₂ (Rutil) + 1 Teil der Verbindung von Beispiel 4 | 7,5 | 10,6 | 22,2 |
| 100 Teile Grundharz + 5 Teile TiO₂ + 1 Teil der Verbindung von Beispiel 6 | 7,3 | 9,5 | 20,2 |

Die Ergebnisse zeigen, dass die Oxidation des 5 Teile TiO₂ auf 100 Teile Harz enthaltenden Grundharzes (Formulierung A) durch Zusatz von 1 Teil der erfindungsgemässen Verbindungen auf 100 Teile Harz erheblich reduziert wird, wie es sich aus der verringerten Farbe der Platten zeigt.

## Patentansprüche

1. Verbindungen der Formel I 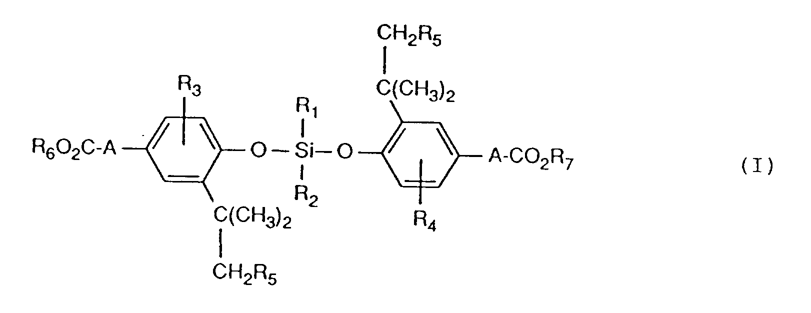 sowie Polymerprodukte der Formel II 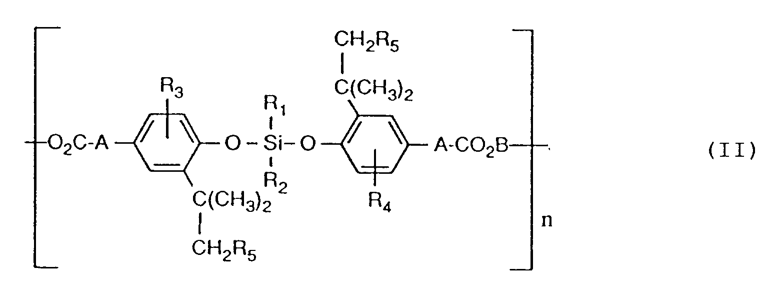 erhältlich durch Umsetzung von Verbindungen der Formel IV 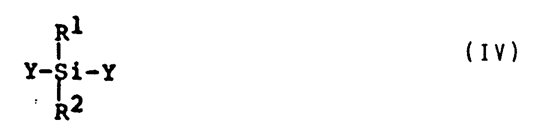 mit Verbindungen der Formel VII 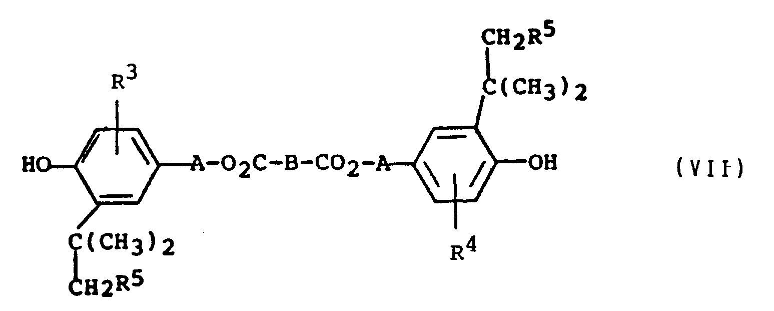 worin R¹, R², R³, R⁴ und R⁵ unabhängig voneinander Wasserstoff, Alkyl mit 1 bis 18 Kohlenstoffatomen, Cycloalkyl mit 5 bis 8 Kohlenstoffatomen, gegebenenfalls durch Alkyl mit 1 bis 18 Kohlenstoffatomen substituiertes Phenyl oder gegebenenfalls durch Alkyl mit 1 bis 12 Kohlenstoffatomen substituiertes Aralkyl mit 7 bis 9 Kohlenstoffatomen, R⁶ und R⁷ unabhängig voneinander Alkyl mit 1 bis 30 Kohlenstoffatomen, Cycloalkyl mit 5 bis 8 Kohlenstoffatomen, gegebenenfalls durch Alkyl mit 1 bis 18 Kohlenstoffatomen substituiertes Phenyl oder gegebenenfalls durch Alkyl mit 1 bis 12 Kohlenstoffatomen substituiertes Aralkyl mit 7 bis 9 Kohlenstoffatomen, A eine direkte Bindung oder einen Methylen- oder Ethylenrest, B einen Alkylenrest mit 2 bis 10 Kohlenstoffatomen, den Rest der Formel -CH₂CH₂-S-CH₂CH₂- oder der Formel III
-CH₂CH₂-(O-CH₂CH₂)ₘ- (III)
wobei m eine ganze Zahl von 1 bis 4 ist, oder B ferner einen Phenylenrest oder einen durch ein Sauerstoff- oder Schwefelatom oder die Gruppe der Formel -C(CH₃)₂- unterbrochenen Biphenylrest, n eine ganze Zahl von 2 bis 100 und Y ein Chlor oder Bromatom darstellen.

2. Verbindungen der Formeln I und II, dadurch gekennzeichnet, dass R¹ und R² Wasserstoff oder Alkyl mit 1 bis 4 Kohlenstoffatomen, R³ und R⁴ Wasserstoff oder Alkyl mit 1 bis 6 Kohlenstoffatomen, R⁵ Wasserstoff, R⁶ und R⁷ Alkyl mit 1 bis 8 Kohlenstoffatomen, A eine direkte Bindung oder einen Ethylenrest, B einen Hexamethylenrest und n eine Zahl von 2 bis 10 darstellen.

3. Verbindungen der Formeln I und II, dadurch gekennzeichnet, dass R¹ und R² Wasserstoff oder Methyl, R³ und R⁴ tert.-Butyl in der ortho-Stellung zum Phenolsauerstoffatom, R⁵ Wasserstoff, R⁶ und R⁷ Alkyl mit 10 bis 18 Kohlenstoffatomen, A eine direkte Bindung, B einen Hexamethylenrest und n eine Zahl von 2 bis 5 darstellen.

4. Verbindungen nach Anspruch 1 der Formel I.

5. Stoffzusammensetzungen, dadurch gekennzeichnet, dass sie ein oxidativem, thermischem oder/und aktinischem Abbau unterliegendes organisches Material und mindestens eine Verbindung der Formel I oder/und II nach Anspruch 1 enthalten.

6. Zusammensetzungen nach Anspruch 5, dadurch gekennzeichnet, dass als organisches Material ein synthetisches Polymer vorliegt.

7. Verwendung von Verbindungen der Formeln I und II nach Anspruch 1 zum Stabilisieren von gegen oxidativen, thermischen oder/und aktinischen Anbau empfindlichem organischem Material.

8. Verfahren zur Herstellung von Verbindungen der Formel I oder II nach Anspruch 1, dadurch gekennzeichnet, dass man eine Verbindung der Formel 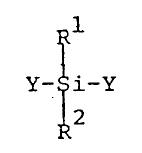 worin Y ein Chlor- oder Bromatom bedeutet, mit einer Verbindung der Formel 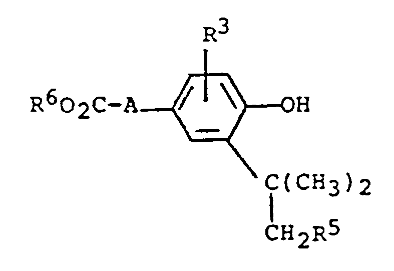 und einer Verbindung der Formel 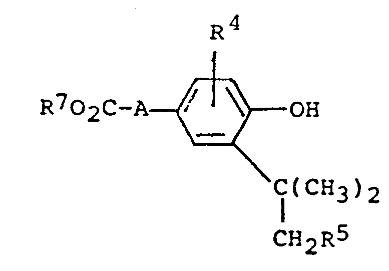 oder mit einer Verbindung der Formel 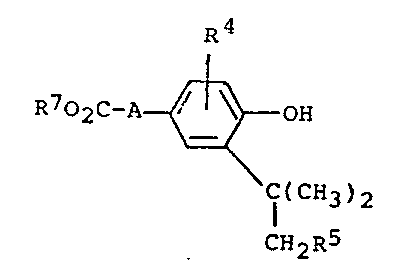 oder mit einer Verbindung der Formel 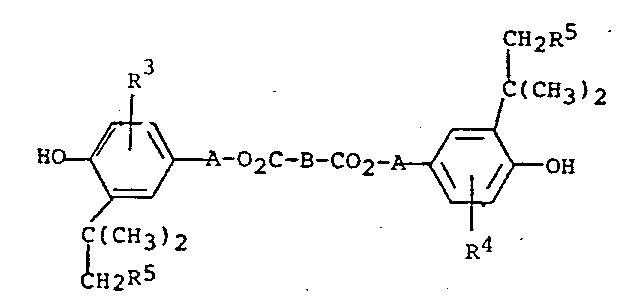 wobei R¹ bis R⁷, A und B die in Anspruch 1 angegebenen Bedeutungen haben, umsetzt.

## Claims

1. A compound of the formula I 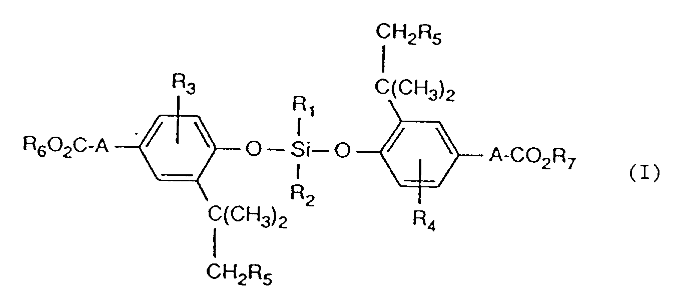 or else a polymer product of the formula II 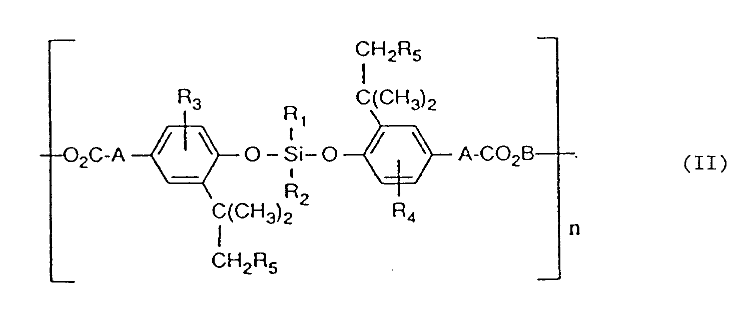 obtainable by reacting a compound of the formula IV 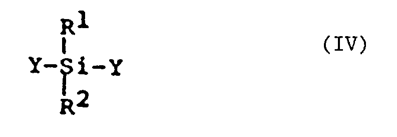 with a compound of the formula VII 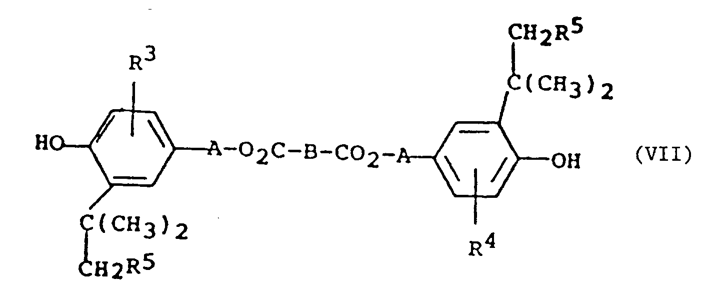 in which
R¹, R², R³, R⁴ and R⁵ are independently of one another hydrogen, alkyl of 1 to 18 carbon atoms, cycloalkyl of 5 to 8 carbon atoms, phenyl, phenyl substituted by alkyl of 1 to 18 carbon atoms, aralkyl of 7 to 9 carbon atoms or said aralkyl substituted by alkyl of 1 to 12 carbon atoms, R⁶ and R⁷ are independently of one another alkyl of 1 to 30 carbon atoms, cycloalkyl of 5 to 8 carbon atoms, phenyl, phenyl substituted by alkyl of 1 to 18 carbon atoms, aralkyl of 7 to 9 carbon atoms or said aralkyl substituted by alkyl of 1 to 12 carbon atoms;
A is a direct bond, a methylene or an ethylene radical,
B is an alkylene radical of 2 to 10 carbon atoms, the radical of formula -CH₂CH₂-S-CH₂CH₂- or of the formula III
-CH₂CH₂-(O-CH₂CH₂)ₘ- (III)
where m is an integer from 1 to 4, B also denotes a phenylene radical or a biphenylene radical interrupted by an oxygen or a sulfur atom or by the group of formula -C(CH₃)₂-, n is an integer from 2 to 100 and Y is a chlorine or bromine atom.

2. A compound of the formula I or II, wherein R¹ and R² are hydrogen or alkyl of 1 to 4 carbon atoms, R³ and R⁴ are hydrogen or alkyl of 1 to 6 carbon atoms, R⁵ is hydrogen, R⁶ and R⁷ are alkyl of 1 to 8 carbon atoms, A is a direct bond or an ethylene radical, B is a hexamethylene radical and n is a number from 2 to 10.

3. A compound of the formula I or II, wherein R¹ and R² are hydrogen or methyl, R³ and R⁴ are tert-butyl and are in the ortho position to the phenolic oxygen atom, R⁵ is hydrogen, and R⁶ and R⁷ are alkyl of 10 to 18 carbon atoms, A is a direct bond, B is a hexamethylene radical and n is a number from 2 to 5.

4. A compound according to claim 1 of the formula I.

5. A composition of matter which contains an organic material subject to oxidative, thermal and/or actinic degradation and at least one compound of the formula I or II according to claim 1.

6. A composition according to claim 5, wherein the organic material is a synthetic polymer.

7. Use of a compound of formula I or II according to claim 1 for stabilizing an organic material sensitive to oxidative, thermal and/or actinic degradation.

8. A process for the preparation of a compound of the formula I or II according to claim 1, which comprises reacting a compound of the formula 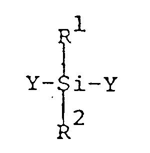 in which Y is a chlorine or bromine atom, with a compound of the formula 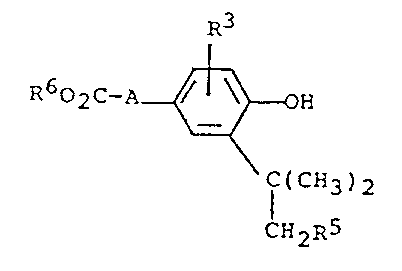 and a compound of the formula 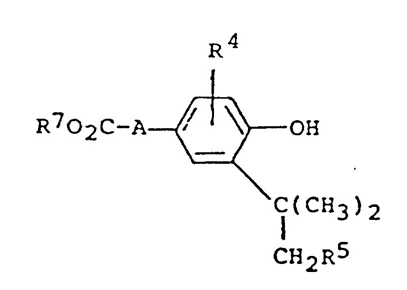 or with a compound of the formula 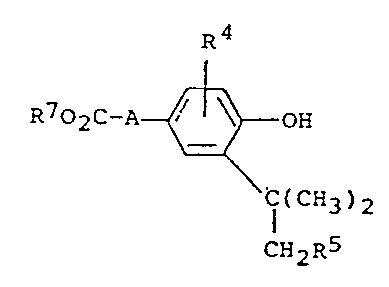 or with a compound of the formula 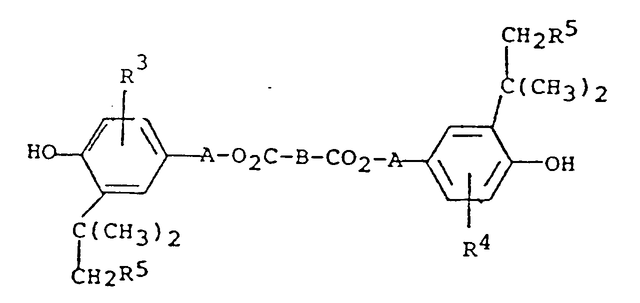 R¹ to R⁷, A and B being as defined in claim 1.

## Revendications

1. Composés répondant à la formule I 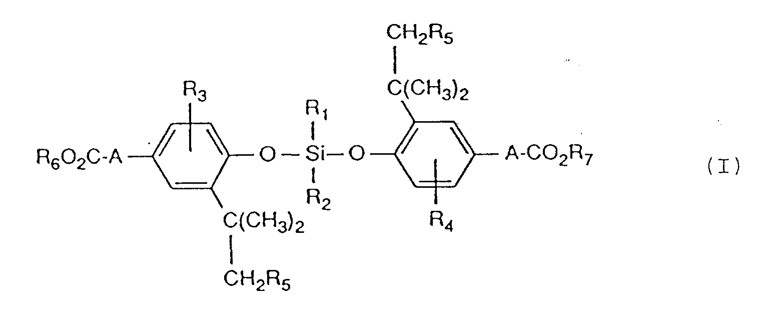 ainsi que produits polymères répondant à la formule II 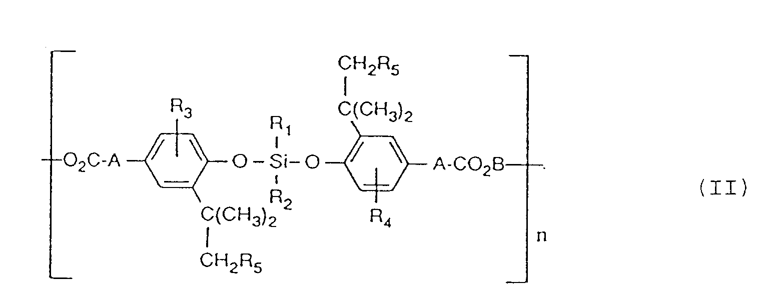 pouvant être obtenus par réaction de composés répondant à la formule IV 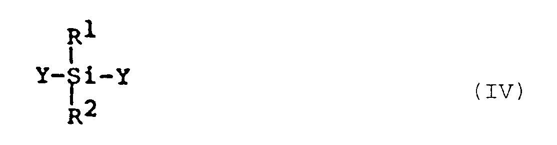 avec des composés répondant à la formule VII 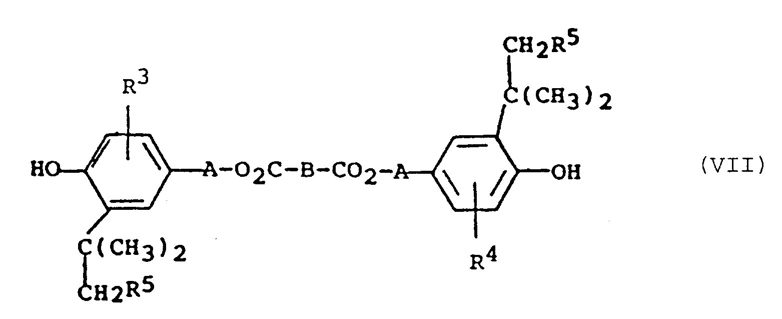 dans laquelle R¹, R², R³, R⁴ et R⁵ désignent indépendamment les uns des autres un atome d'hydrogène, un groupe alkyle en C₁-C₁₈, un groupe cycloalkyle en C₅-C₈, un groupe phényle substitué le cas échéant par un groupe alkyle en C₁-C₁₈ ou un groupe aralkyle en C₇-C₉ substitué le cas échéant par un groupe alkyle en C₁-C₁₂, R⁶ et R⁷ désignent indépendamment l'un de l'autre un groupe alkyle en C₁-C₃₀, un groupe cycloalkyle en C₅-C₈, un groupe phényle éventuellement substitué par un groupe alkyle en C₁-C₁₈ ou un groupe aralkyle en C₇-C₉ substitué le cas échéant par un groupe alkyle en C₁-C₁₂, A désigne une liaison directe ou un radical méthylène ou éthylène, B désigne un radical alkylène en C₂-C₁₀, le radical répondant à la formule -CH₂CH₂-S-CH₂CH₂- ou à la formule III
-CH₂CH₂-(O-CH₂CH₂)ₘ- (III)
dans laquelle m est un nombre entier de 1 à 4, ou bien B désigne encore un radical phénylène ou un radical diphényle interrompu par un atome d'oxygène ou de soufre ou le groupe répondant à la formule -C(CH₃)₂-, n est un entier de 2 à 100 et Y représente un atome de chlore ou de brome.

2. Composés répondant aux formules I et II, caractérisés en ce que R¹ et R² désignent un atome d'hydrogène ou un groupe alkyle en C₁-C₄, R³ et R⁴ désignent un atome d'hydrogène ou un groupe alkyle en C₁-C₆, R⁵ un atome d'hydrogène, R⁶ et R⁷ un groupe alkyle en C₁-C₈, A une liaison directe ou, radical éthylène, B un radical hexaméthylène et n un nombre de 2 à 10.

3. Composés répondant aux formules I et II, caractérisés en ce que R¹ et R² désignent un atome d'hydrogène ou un groupe méthyle, R³ et R⁴ un groupe tert-butyle en position ortho par rapport à l'atome d'oxygène phénolique, R⁵ un atome d'hydrogène, R⁶ et R⁷ un groupe alkyle en C₁₀-C₁₈, A une liaison directe, B un radical hexaméthylène et n un nombre de 2 à 5.

4. Composés selon la revendication 1 répondant à la formule I.

5. Compositions de substances, caractérisées en ce qu'elles contiennent une matière organique soumise à une dégradation oxydante, thermique et/ou actinique et au moins un composé répondant aux formules I et/ou II selon la revendication 1.

6. Compositions selon la revendication 5, caractérisées en ce que la matière organique est un polymère synthétique.

7. Utilisation de composés répondant aux formules I et II selon la revendication 1 pour la stabilisation d'une matière organique sensible à la dégradation oxydante, thermique et/ou actinique.

8. Procédé pour la préparation de composés répondant aux formules I ou II selon la revendication 1, caractérisé en ce qu'on fait réagir un composé répondant à la formule 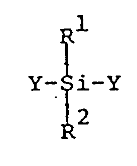 dans laquelle Y désigne un atome de chlore ou de brome, avec un composé répondant à la formule 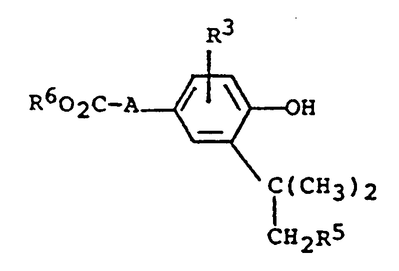 et un composé répondant à la formule 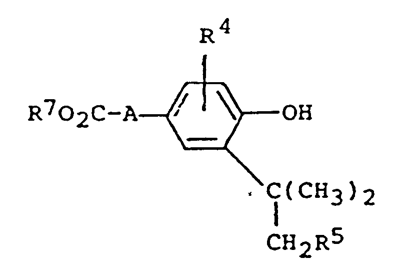 ou avec un composé répondant à la formule 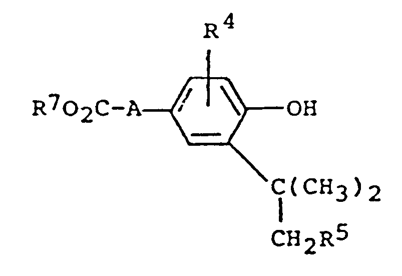 ou avec un composé répondant à la formule 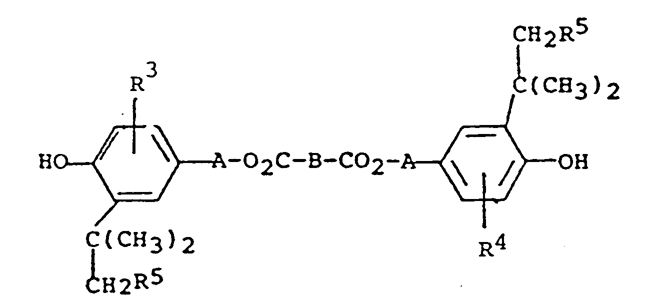 dans lesquels R¹ à R⁷, A et B ont les significations indiquées dans la revendication 1.
